# EUROPEAN PATENT APPLICATION

(11) **EP 2 626 783 A1**
(43) Date of publication of application: **14.08.2013**
(21) Application number: 11830394.0
(22) Date of filing: 26.01.2011
(51) Int. Cl.: G06F 9/44

(54) **SOFTWARE GENERATION DEVICE, SOFTWARE GENERATION METHOD AND PROGRAM**

(30) Priority: 04.10.2010 JP 2010225244
(71) Applicant: Mitsubishi Electric Corporation, Tokyo 100-8310 (JP)
(72) Inventor: KATSUKURA Makoto, Tokyo 100-8310 (JP); NAKATA Masanori, Tokyo 100-8310 (JP)
(74) Representative: Pfenning, Meinig & Partner GbR
(86) International application number: PCT/JP2011/051526
(87) International publication number: WO 2012/046460

(57) **Abstract**

A source code (102) for generating an operation program (105) is converted into data including control blocks associated with source code patterns by performing a matching using the source code patterns. Next, the converted data including the control blocks are displayed using icons defined correspondingly to the respective control blocks. Accordingly, an operator of the software generation device (10) can visually grasp the detail of the source code (102).

## Description

### Technical Field

The present invention relates to a software generation device, a software generation method and a program, and more specifically, to a software generation device that generates a software to be executed by a predetermined control device, a software generation method for generating a software to be executed by a predetermined control device, and a program.

### Background Art

Air-conditioning facilities, typical of installed facilities, often employ an operational configuration in which a plurality of devices distributed in living spaces and work areas are centrally managed by a computer. The installed facilities of this type have a large power consumption, but a large energy saving effect can be expected if respective outputs by the installed facilities are finely adjusted. Hence, operation programs for adjusting the outputs by the installed facilities become complex year after year, and the quantity of source codes relating to an operation program also increases.

An actual damage originating from an error occurred during the execution of the operation program may remarkably expand depending on the application of the installed facilities. Accordingly, the allowable range of an error originating from a program used for an operation of the installed facilities is narrower than the allowable range of an error originating from a program used for an operation of, for example, an information technology device. Hence, production of an operation program for installed facilities typically needs high costs.

Accordingly, a development assisting device is proposed for generating an operation program for installed facilities at low costs while maintaining a quality (see, for example, Patent Literature 1).

### Prior Art Literature

### Patent Literature

Patent Literature 1: Unexamined Japanese Patent Application Kokai Publication No. 2009-157751

### Disclosure of the Invention

### Problem to be Solved by the Invention

The development assisting device disclosed in Patent Literature 1 extracts state transition conditions that should have an exclusivity with each other among state transition information. Accordingly, checking on whether or not the state transition condition that should have an exclusivity really has an exclusivity is facilitated. Hence, every single state transition condition having no exclusivity can be corrected so as to have an exclusivity. This avoids a condition in which a piece of software infinitely repeats a particular process, and creates an undesireable generation of large source codes.

In order to utilize the above-explained development assistance device, an operator must generate state transition information and state transition conditions. However, typical engineers have no skill in generating state transition information and state transition conditions under the present circumstances.

The present invention has been made in view of the above-explained circumstances, and an objective of the invention is to generate a program through a simple operation.

### Means for Solving the Problem

To accomplish the above object, a software generation device of the present invention includes: a matching means for matching a plurality of code blocks with a source code of a software, each block comprising a letter string composing a part of the source code and defined in advance; a converting means for replacing a part of the source code where the block matches with the matched block to convert the source code into data including the block; and generating means for generating the software based on the data including the block.

### Effects of the Invention

According to the present invention, a source code for generating a piece of software is converted into data including a plurality of blocks. Hence, a user can change the content of a process by the software and the order of processes by replacing any given block with a desired block or by changing the arrangement of the blocks. Therefore, a desired program can be generated through a simple operation.

### Brief Description of Drawings

FIG. 1 is a block diagram illustrating a software generation device according to an embodiment of the present invention together with an air-conditioning system;
FIG. 2 is a diagram illustrating a display window;
FIG. 3 is a diagram illustrating an exemplary structure of dictionary information;
FIG. 4 is a diagram illustrating an exemplary relationship between a piece of source code and a control block;
FIG. 5 is a flowchart for explaining an operation of a CPU;
FIG. 6 is a diagram illustrating exemplary control block information;
FIG. 7 is a diagram illustrating exemplary control block related information;
FIG. 8 is a diagram illustrating a window visable on a display;
FIG. 9 is a diagram illustrating a window visable on the display;
FIG. 10 is a flowchart illustrating a sub routine executed by the CPU;
FIG. 11 is a diagram illustrating exemplary operation constraint condition information;
FIG. 12 is a diagram illustrating a comparison result shown on the display;
FIG. 13 is a diagram illustrating a comparison result shown on the display;
FIG. 14 is a diagram for explaining a modification of the embodiment; and
FIG. 15 is a diagram for explaining a modification of the embodiment.

### Mode for Carrying Out the Invention

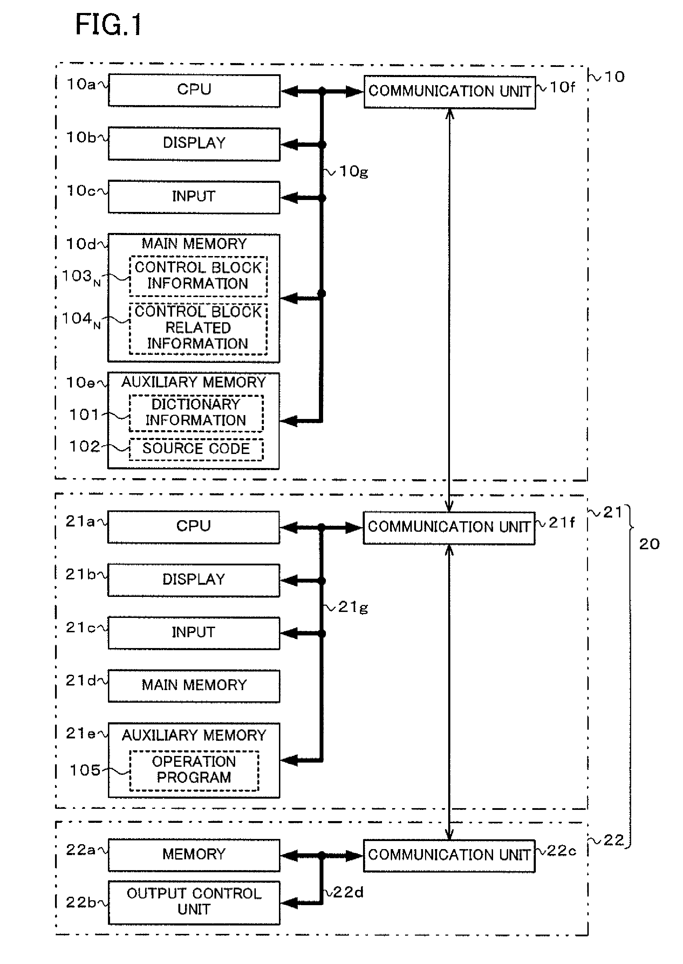

An explanation will be given below of an embodiment of the present invention with reference to the accompanying drawings. FIG. 1 is a block diagram illustrating a software generation device 10 of this embodiment together with an air-conditioning system 20 including a remote control device 21 and an air-conditioner device 22. This software generation device 10 is a device that generates an operation program 105 to be executed by the air-conditioning system 20. As illustrated in FIG. 1, the software generation device 10 includes a CPU (Central Processing Unit) 10a, a display 10b, an input 10c, a main memory 10d, an auxiliary memory 10e, and a communication unit 10f.

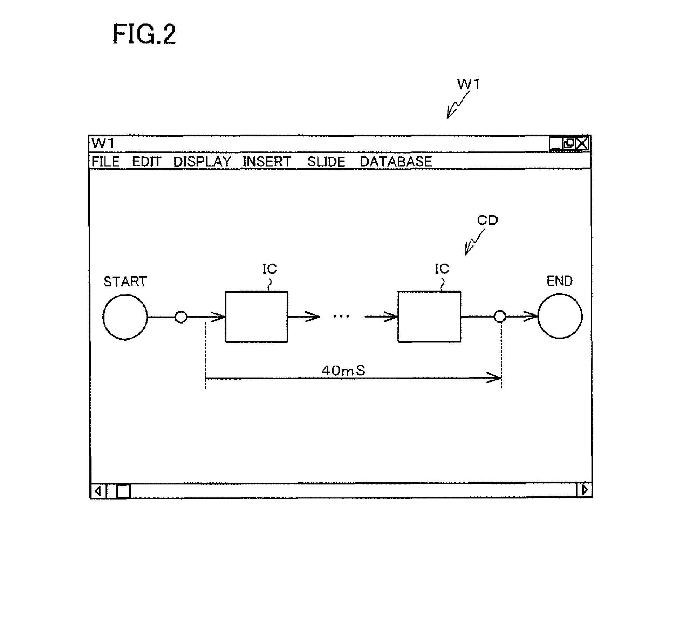

The display 10b includes an LCD (Liquid Crystal Display) or a CRT (Cathode Ray Tube) or the like. FIG. 2 illustrates a window W1 serving as a user interface when the operation program 105 is generated. The display 10b shows various windows typified by the window W1 in response to an instruction from the CPU 10a. Moreover, the display shows a process result and the like of the CPU 10a as needed.

The input 10c includes pointing devices, such as a keyboard, a mouse or a touch panel. An instruction from an operator is input through the input 10c. The input instruction is notified to the CPU 10a through a system bus 10g.

The main memory 10d includes a volatile memory, such as a DRAM (Dynamic Random Access Memory) or an SRAM (Static Random Access Memory). The main memory 10d is utilized as a work area for the CPU 10a.

The auxiliary memory 10e includes a nonvolatile memory, such as a magnetic disk or a flash memory. The auxiliary memory 10e stores dictionary information 101 and a source code 102.

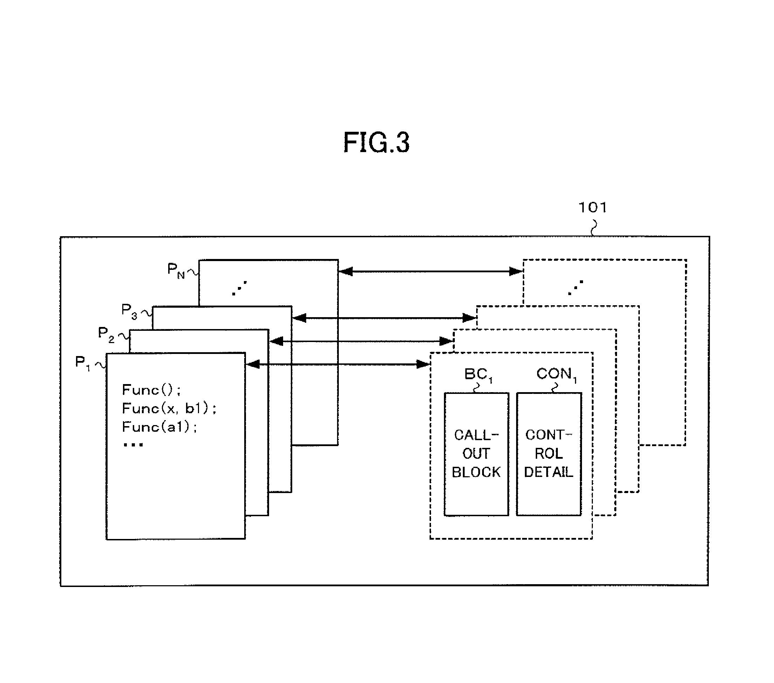

FIG. 3 is a diagram illustrating an exemplary structure of the dictionary information 101. As illustrated in FIG. 3, the dictionary information 101 includes source code patterns P_{N}, control blocks BC_{N}, and control detail information CON_{N} indicating the detail of each control block BC_{N}.

The source code pattern P_{N} is a source code indicating the detail of a single process among a plurality of processes to be executed by the operation program 105. As illustrated in FIG. 3, the source code pattern P_{N} includes letter strings (text) used for describing the source code. For example, the source code pattern P_{N} is expressed in the form of "function name (first parameter, second parameter);" or the like.

When, for example, a plurality of processes to be executed by the operation program 105 are three processes which are reading of a set temperature, setting of a temperature of blown air, and setting of a wind volume, the source code of this operation program 105 can be expressed by a combination of a source code pattern indicating a reading process of a set temperature, a source code pattern indicating a setting process of a temperature of a blown air, and a source code pattern indicating a setting process of a wind volume.

A source code that is typically expressed by letter strings of 10000 lines using several ten kinds of source code patterns can be expressed by, for example, letter strings of about 100 lines or about 100 icons.

The control block BC_{N} is associated with each source code pattern P_{N}. This control block BC_{N} is a concept of handling the source code pattern P_{N}. According to the software generation device 10, this control block BC_{N} is represented by an icon or an image in accordance with the detail of the control block BC_{N}.

The control detail information CON_{N} is information for identifying the detail of the control block BC_{N}. The control detail information CON_{N} represents, for example, the same detail as that of the source code pattern P_{N}. The control detail information is handled in a condition associated with the control block BC_{N}.

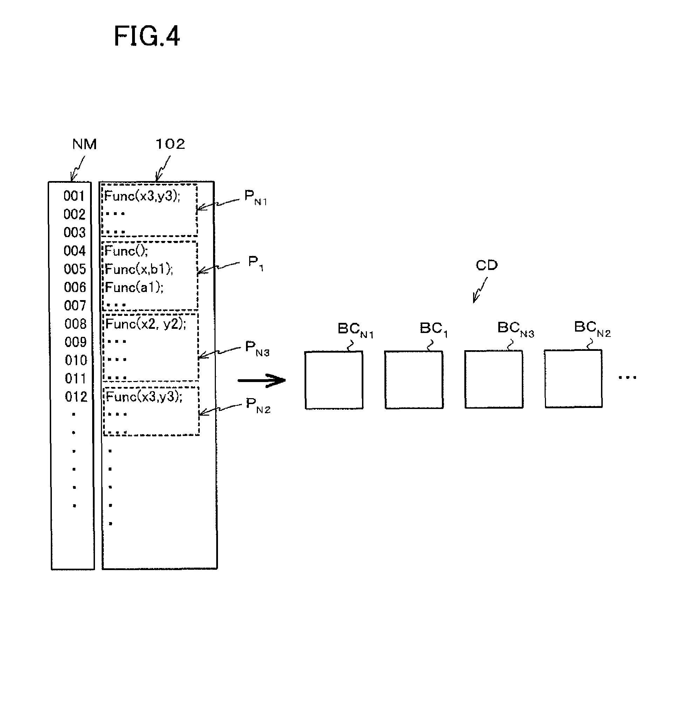

Returning to FIG. 1, the source code 102 is data that is a source for generating the operation program 105. FIG. 4 is a diagram illustrating exemplary relationship between the source code 102 and the control blocks BC_{N}. As illustrated in FIG. 4, the source code 102 is data described by letter strings representing functions and parameters.

Returning to FIG. 1, the communication unit 10f includes, for example, a serial interface or a LAN (Local Area Network) interface or the like. The software generation device 10 communicates with the remote control device 21 through the communication unit 10f.

The CPU 10a generates the operation program 105 to be executed by the remote control device 21 based on the source code 102 stored in the auxiliary memory 10e. Next, the CPU outputs this operation program 105 to the remote control device 21 through the communication unit 10f.

The remote control device 21 is disposed on, for example, a wall surface or the like forming a space (hereinafter, referred to as an air-conditioning space) subjected to the air-conditioning by the air-conditioning system 20. The remote control device serves as an interface that receives an instruction from the user. As illustrated in FIG. 1, the remote control device 21 includes a CPU 21 a, a display 2 1 b, an input 2 1 c, a main memory 21d, an auxiliary memory 21e, and a communication unit 21f.

The display 21b includes an LCD. The display shows information on a set temperature, a temperature (a room temperature) of the space subjected to the air-conditioning, an operation mode, and the like obtained through a communication with the air-conditioner device 22.

The input 21c is an interface including key switches or a touch panel or the like. An instruction from the user is input through this input 21c. The input instruction is notified to the CPU 21a through a system bus 21g.

The main memory 21d includes a nonvolatile memory, such as a DRAM or an SRAM. The main memory 21d is utilized as a work area for the CPU 21a.

The auxiliary memory 21e includes a nonvolatile memory, such as a magnetic disk or a flash memory. The auxiliary memory 10e stores the operation program 105 output by the software generation device 10.

The communication unit 21 f includes, for example, a serial interface, a LAN interface, a wireless communication interface or the like. The remote control device 21 communicates with the software generation device 10 and the air-conditioner device 22 through the communication unit 21f.

The CPU 21a reads and executes the operation program 105 stored in the auxiliary memory 21 e. Hence, operation information, such as a set temperature, a set wind volume, and an operation mode, set in accordance with the instruction from the user are output to the air-conditioning device 22 through the communication unit 21f. Moreover, the display 21b of the remote control device 21 shows the operation information, such as the set temperature, the set wind volume, and the operation mode.

The air-conditioner device 22 is disposed on, for example, a wall surface, a ceiling or the like forming a space subjected to the air-conditioning by the air-conditioning system 20. The air-conditioner device 22 performs air-conditioning on the air-conditioning space. As illustrated in FIG. 1, the air-conditioner device 22 includes a memory 22a, an output control unit 22b, and a communication unit 22c.

The memory 22a includes a nonvolatile memory like a flash memory or a volatile memory like an SRAM. The memory 22a stores the operation information received through the communication unit 22c.

The output control unit 22b reads the operation information stored in the memory 22a. Next, the output control unit 22b refers to the read operation information, and drives a fan for blowing air having undergone air-conditioning to the air-conditioning space, a louver for blowing the air-conditioning air, an outdoor device that performs heat exchange with external air, and the like. Accordingly, air conditioning is performed on the air-conditioning space in accordance with the detail of the instruction from the user.

The communication unit 22c includes, for example, a serial interface, a wireless communication interface, or the like. The air-conditioner device 22 communicates with the remote control device 21 through the communication unit 22c.

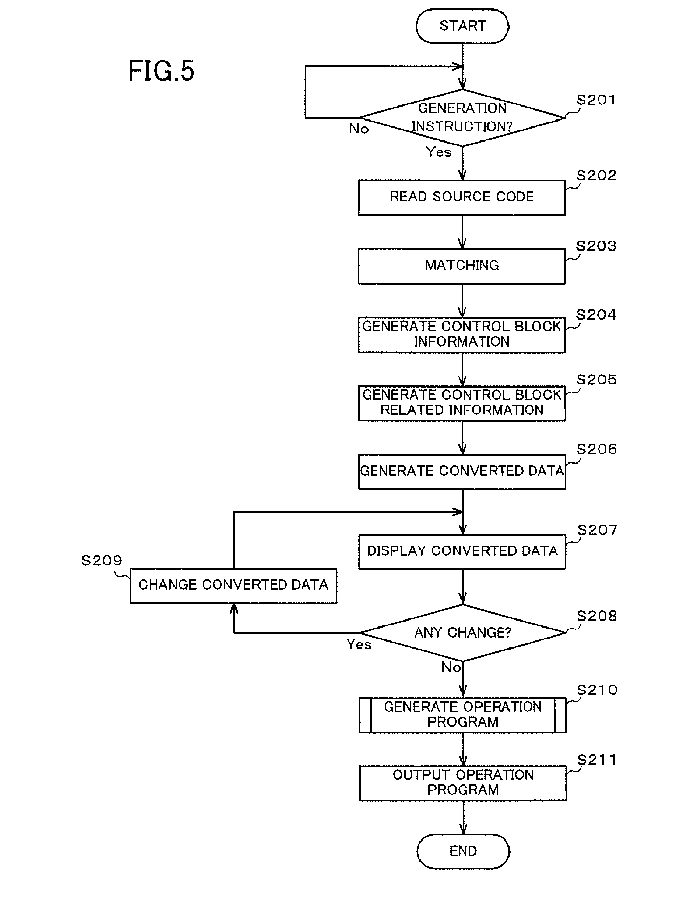

A flowchart of FIG. 5 corresponds to successive algorithms of the program executed by the CPU 10a of the software generation device 10. Hereinafter, an explanation will be given of an operation of the software generation device 10 with reference to FIG. 5. When the software generation device 10 is activated, the CPU 10a reads the program for generating the operation program 105 from the auxiliary memory 10e, and executes the read program.

In a first step S201, the CPU 10a waits for an instruction of generating the operation program from the user. When the generation instruction from the user is input through the input 10c (step S201: YES), the CPU 10a progresses the process to next step S202.

In next step S202, the CPU 10a reads the source code 102 stored in the auxiliary memory 10e. As is clear from FIG. 4, line numbers NM are added to the source code 102, and this source code 102 is developed in the main memory 10d.

In next step S203, the CPU 10a performs a matching process on the source code 102 developed in the main memory 10d. More specifically, the CPU 10a reads a first source code pattern P₁ from the source code patterns P_{N} composing the dictionary information 101 stored in the auxiliary memory 10e. Next, the letter strings composing the source code pattern P₁ are compared with the letter strings composing the source code 102.

When the letter strings composing the source code pattern P₁ match the letter strings composing the source code 102, the CPU 10a determines that the source code pattern P₁ matches. For example, as is clear from FIG. 4, the letter strings composing the source code pattern P₁ illustrated in FIG. 3 match the letter strings of the source code 102 from the line [004] to the line [007]. In this case, the CPU 10a determines that the source code pattern P₁ matches.

The CPU 10a successively performs the above-explained matching process on the source code patterns from the source code pattern P₁ to the source code pattern P_{N}.

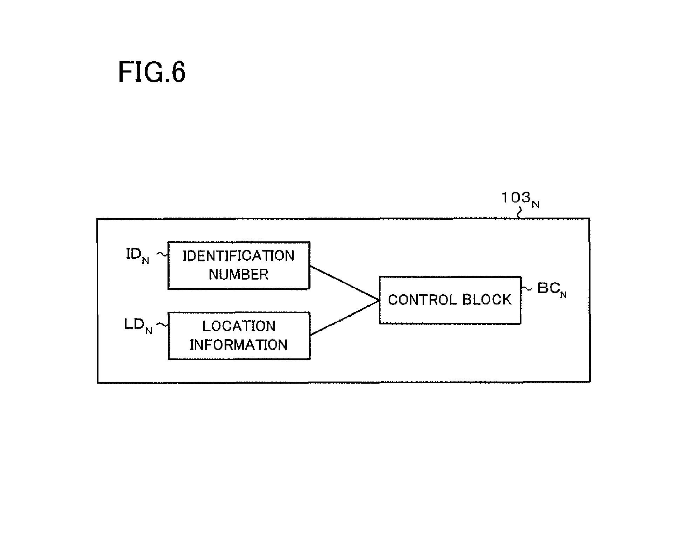

In next step S204, the CPU 10a generates control block information 103_{N} for the matched source code pattern P_{N}. FIG. 6 is a diagram illustrating exemplary control block information 103_{N}. As illustrated in FIG. 6, the control block 103_{N} includes an identification number ID_{N} allocated to the control block BC_{N} and location information LD_{N}.

The identification number ID_{N} is a number for identifying the control block BC_{N} associated with the source code pattern P_{N}. The identification number ID_{N} is, for example, successive numbers from the control block BC₁ to the control block BC_{N}.

The location information LD_{N} is information indicating the location of the source code pattern P_{N} in the source code 102. The location information of the source code pattern P₁ matching the source code 102 includes information on, for example, line numbers [004] of the first and final lines [007] for specifying the lines from [004] to [007] as is clear from FIG. 4. The location information LD_{N} enables a determination of the location where the source code pattern P_{N} matches.

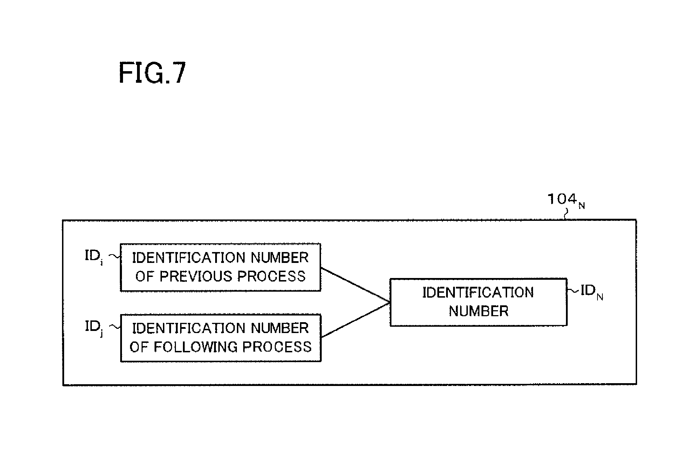

In next step S205, the CPU 10a generates control block-related information 104_{N} on the matched source code pattern P_{N}. FIG. 7 is a diagram illustrating exemplary control block-related information 104_{N}. As illustrated in FIG. 7, the control block-related information 104_{N} includes pieces of information on the identification number ID_{N} of the control block BC_{N} associated with the matched source code pattern P_{N}, an identification number IDᵢ of a control block BCᵢ associated with a source code pattern Pᵢ having a matched location with the source code 102 ahead of the source code pattern P_{N}, and an identification number IDⱼ of a control block BCⱼ associated with a source code pattern Pⱼ having the matched location with the source code 102 behind the source code pattern P_{N}.

For example, as is clear from FIG. 4, a control block related information 104₁ for a source code pattern P₁ includes information on an identification number ID₁ of a control block BC₁ associated with a source code pattern P₁, an identification number ID_{N1} of a source code pattern P_{N1} matched at the front location of the source code pattern P₁, and an identification number ID_{N1} of the source code pattern P_{N1} matched at the rear location of the source code pattern P₁.

In a next step S206, converted data CD is generated from the control block information 103_{N} and the control block related information 104_{N}. As is clear from FIG. 4, the converted data CD is data generated by arranging the control blocks BC_{N} associated with the source code patterns P_{N} matching the source code 102 based on the location information of the control block information 103_{N}.

For example, as illustrated in FIG. 4, when a source code pattern P_{N1}, a source code pattern P₁, a source code pattern P_{N3}, a source code pattern P_{N2}, ..., etc., are arranged in this order from the header of the source code 102 to the bottom thereof, the converted data CD is generated which has a control block BC_{N1}, a control block BC₁, a control block BC_{N3}, a control block BC_{N2}, ..., etc., arranged in this order.

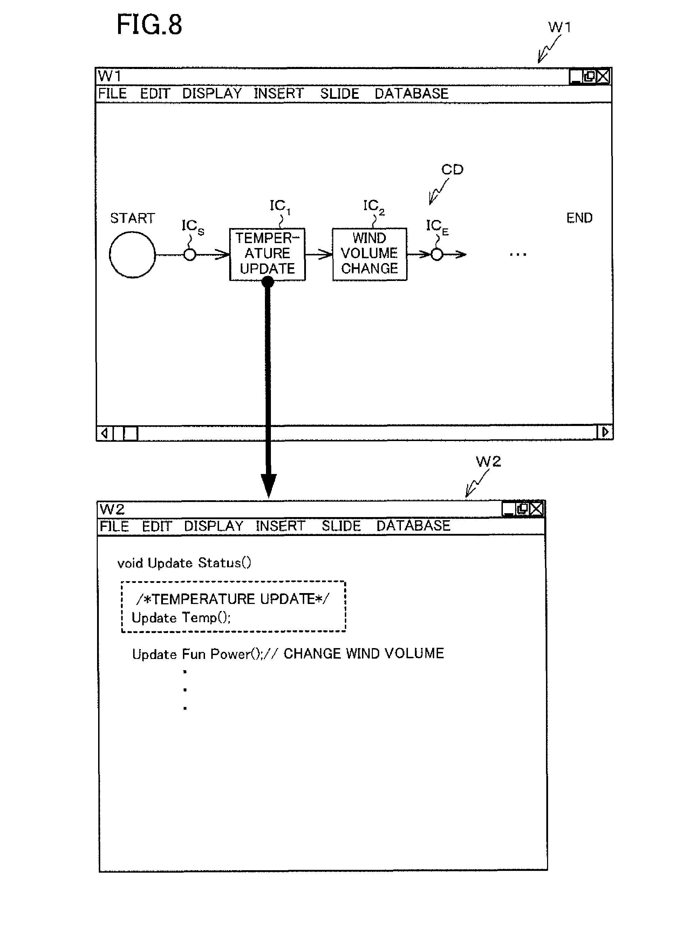

In a next step S207, the CPU 10a shows the content of the converted data CD on the display 10b. FIG. 8 is a diagram illustrating a window W1 displayed on the display 10b. As illustrated in FIG. 8, the CPU 10a shows the control blocks BC_{N} composing the converted data CD using corresponding icons IC_{N}.

Accordingly, the operator can visually understand the operation program 105 generated based on the source code 102, and correct the operation program. For example, when the operator attempts to change the converted data CD, first, the operator selects and double clicks a desired icon IC using a mouse or the like. Accordingly, a window W2 indicating the detail of the source code 102 pops up. The window W2 displays the letter strings corresponding to the icon IC double-clicked in the source code 102 in a highlighted manner with a frame indicated by dotted lines, a marker, or the like.

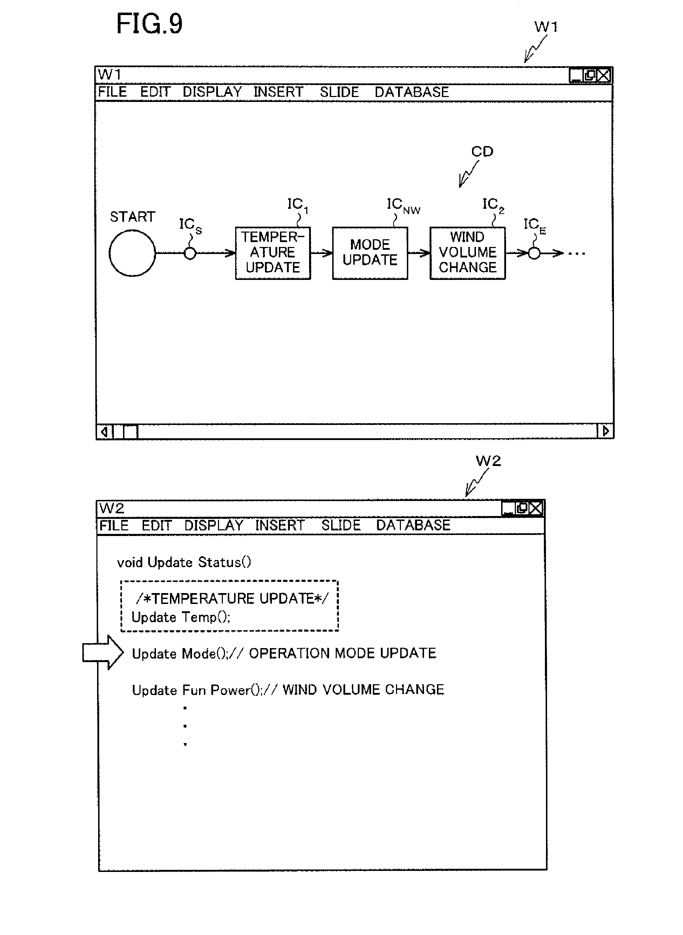

The operator can correct the source code 102 by inserting a letter string representing a desired command in the window W2. For example, as is clear from the window W2 in FIG. 9, by inserting a command for updating the operation mode between a temperature updating command corresponding to an icon IC₁ and a wind volume changing command corresponding to an icon IC₂, a command for updating the operation mode can be added to the source code 102. In this case, as is clear from the window W1 in FIG. 9, a new icon IC_{NW} corresponding to the added command is displayed between the icon IC₁ and the icon IC₂. Moreover, the operator can also change the source code 102 by inserting the icon IC_{NW} between the icon IC₁ and the icon IC₂.

The CPU 10a waits for an input from the above-explained operator in next step S208. When the source code 102 is changed (step S208: YES), the process progresses to step S209. The converted data CD is changed so as to correspond to the changed source code 102, and the process returns to the step S207. Subsequently, the CPU 10a repeatedly executes the processes from the step S207 to the step S209 until the determination in the step S208 becomes a positive result. This makes allows the operator to correct and edit the source code 102 while checking the converted data CD generated based on the latest source code 102.

Conversely, when the correction of the source code 102 by the operator ends and a final source code 102 is settled (step S208: No), the CPU 10a progresses the process to step S210.

To simplify the explanation, the fact that converted data CD finally settled includes, for example, 10 control blocks BC_{N} is presumed. Moreover, the fact that respective control blocks are any of a structure block, a call-out block, a control block indicating a measurement-start probe, a control block indicating a measurement-end probe, and an access block is also presumed.

The above-explained structure block is a control block corresponding to a source code representing a branch of a process and a loop operation of the process. The call-out block is a control block corresponding to a source code representing an operation of calling out a process corresponding to another control block. Moreover, as illustrated in FIG. 8, for example, the measurement-start probe block is a control block indicated by a small circular icon IC_{S}. The measurement-end probe block is a control block indicated by a small circular icon IC_{E}. Those control blocks are control blocks corresponding to source codes representing a measurement of a time necessary for a process represented by a control block present between the measurement-start probe block and the measurement-end probe block. The access block is a control block corresponding to a source code representing an operation of executing an accessing process to a designated address based on information, such as an address of a memory or a file for specifying a resource, the kind of written data, data writing destination and reading destination.

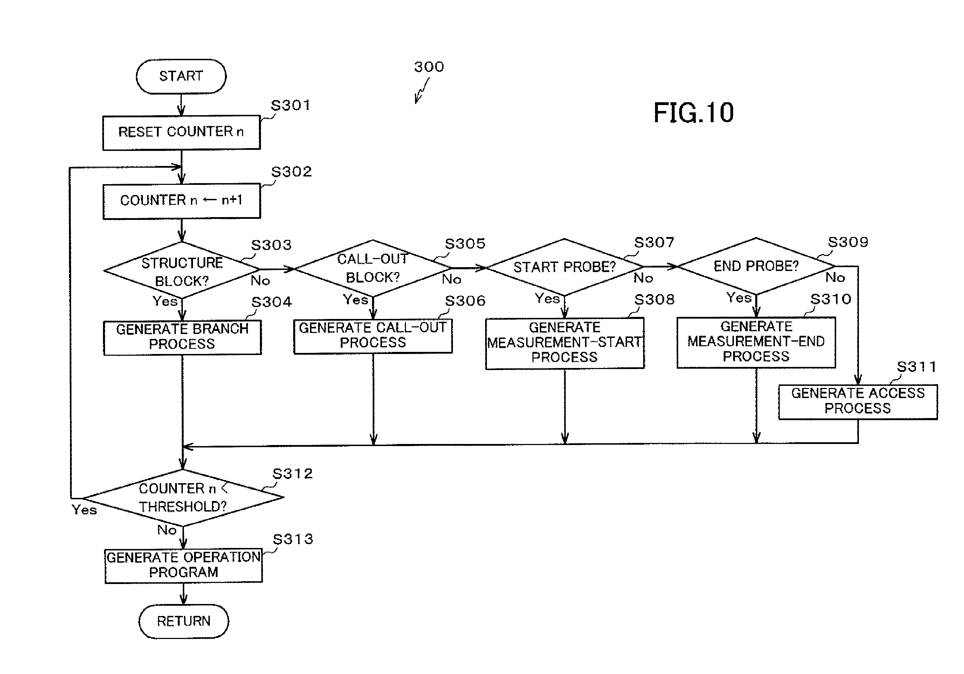

In step S210, the CPU 10a executes a sub routine 300 illustrated by the flowchart of FIG. 10. In a first step S301, the CPU 10a resets a counter n.

In a next step S302, the CPU 10a increments the counter n.

In a next step S303, the CPU 10a determines whether or not an Nth (in this example, first) control block BC_{N} composing the converted data CD is the structure block. Next, when the Nth control block BC_{N} is the structure block (step S303: YES), the process progresses to a next step S304.

In a next step S304, the CPU 10a generates a program for executing a branching process based on the source code pattern P_{N} relating to the control block BC_{N}. The branching process is to execute processes different from each other between cases in which a condition is satisfied and in which the condition is dissatisfied.

Conversely, when the determination in the step S303 is a negative result (step S303: NO), the CPU 10a progresses the process to step S305.

In step S305, the CPU 10a determines whether or not the Nth (in this example, first) control block BC_{N} composing the converted data CD is a call-out block. When the Nth control block BC_{N} is the call-out block (step S305: YES), the process progresses to a next step S306.

In step S306, the CPU 10a generates a program for performing a call-out process based on the source code pattern P_{N} relating to the control block BC_{N}. The call-out process is to perform another process in advance and to perform next step when that process completes.

Conversely, when the determination in the step S305 is a negative result (step S305: NO), the CPU 10a progresses the process to step S307.

In step S307, the CPU 10a determines whether or not the Nth (in this example, first) control block BC_{N} composing the converted data CD is the measurement-start probe block. When the Nth control block BC_{N} is the measurement-start probe block (step S307: YES), the process progresses to next step S308.

In step S308, the CPU 10a generates a program for executing a start process of a measurement based on the source code pattern P_{N} relating to the control block BC_{N}. The measurement-start process is a process of starting a measurement of an elapsed time by a measurement-start command.

Conversely, when the determination in the step S307 is a negative result (step S307: NO), the CPU 10a progresses the process to step S309.

In step S309, the CPU 10a determines whether or not the Nth (in this example, first) control block BC_{N} composing the converted data CD is the measurement-end probe block. When the Nth control block BC_{N} is the measurement-end probe block (step S309: YES), the process progresses to next step S310.

In step S310, the CPU 10a generates a program for executing a measurement-end process based on the source code pattern P_{N} relating to the control block BC_{N}. The measurement-end process is a process of ending a measurement of the elapsed time based on a measurement-end command.

Conversely, when the determination in the step S309 is a negative result (step S309: NO), the CPU 10a progresses the process to step S311.

In step S311, the CPU 10a generates a program for executing an access process based on the source code pattern P_{N} relating to the control block BC_{N}. The access process is a process of reading from the predetermined address in the memory or writing to the predetermined address in the memory.

When the processes through the above-explained steps S304, S306, S308, S310, and S311 complete, the CPU 10a progresses the process to next step S312.

In step S312, the CPU 10a determines whether or not the counter n is less than a threshold value. The threshold is equal to the total number of the control blocks composing the converted data CD, and is 10 in this example. When the value of the counter n is less than the threshold (step S312: YES), the CPU 10a returns the process to the step S302, and repeatedly executes the processes from the step S302 to the step S312 until the determination in the step S312 becomes a negative result. Accordingly, N number (in this example, 10) of programs are generated from the source code pattern P_{N} which correspond to the control blocks BC_{N} composing the converted data CD.

Conversely, when the counter n becomes equal to or greater than the threshold (step S312: NO), the CPU 10a progresses the process to next step S313.

In step S313, the CPU 10a arranges the N number of programs in series, and causes the successive programs to be associated with each other, thereby generating the operation program 105. Next, when the operation program 105 is generated in the step S313, the CPU 10a terminates the sub routine 300, and progresses the process to step S211.

In step S211, the CPU 10a outputs the operation program 105 to the remote control device 21 through the communication unit 10f. The operation program 105 output to the remote control device 21 is output to the auxiliary memory 21e through the communication unit 21 f configuring the remote control device 21. Accordingly, the operation program 105 is installed in the remote control device 21.

When the process in the step S211 completes, the CPU 10a terminates the process of generating the operation program 105.

Next, an explanation will be given of an operation of the remote control device 21 in which the operation program 105 has been installed.

When the operation program 105 is installed, the CPU 21a configuring the remote control device 21 reads the operation program 105 from the auxiliary memory 21 e, and executes the operation program 105. At this time, the CPU 21a starts measuring an elapsed time based on the measurement-start command on the basis of the measurement-start probe of the operation program 105, and ends the measurement of the elapsed time based on the measurement-end command on the basis of the measurement-end probe. Through such operations, a time (necessary time) is measured which is needed for the process executed until the measurement-end command is executed after the measurement-start command is executed. When measuring the necessary time, the CPU 21a outputs, to the software generation device 10, information relating to the measurement result through the communication unit 21f.

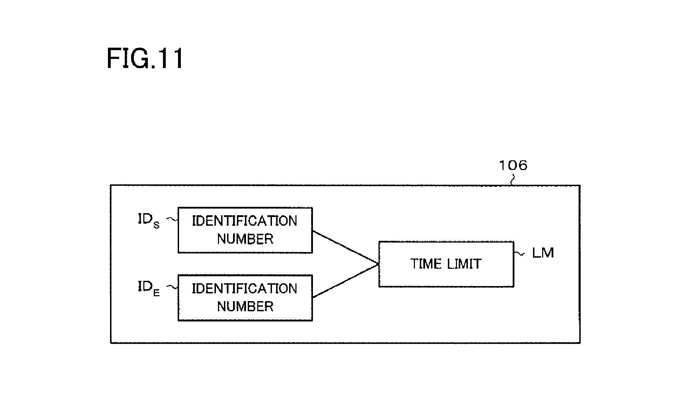

The CPU 10a of the software generation device 10 compares, when receiving the information relating to the measurement result, this measurement result with operation constraint condition information 106. FIG. 11 is a diagram illustrating exemplary operation constraint condition information 106. As illustrated in FIG. 11, the operation constraint condition information 106 includes an identification number ID_{S} of the control block representing the measurement-start probe, an identification number ID_{E} of the control block representing the measurement-end probe, and information relating to a time limit LM.

The CPU 10a specifies the measurement-start command and the measurement-end command from the identification numbers in the operation constraint condition information 106, and specifies a time limit until the measurement-end command is executed after the measurement-start command is executed. Next, the measurement result (the necessary time) output by the remote control device 21 is compared with the time limit, and a comparison result is displayed on the display 10b.

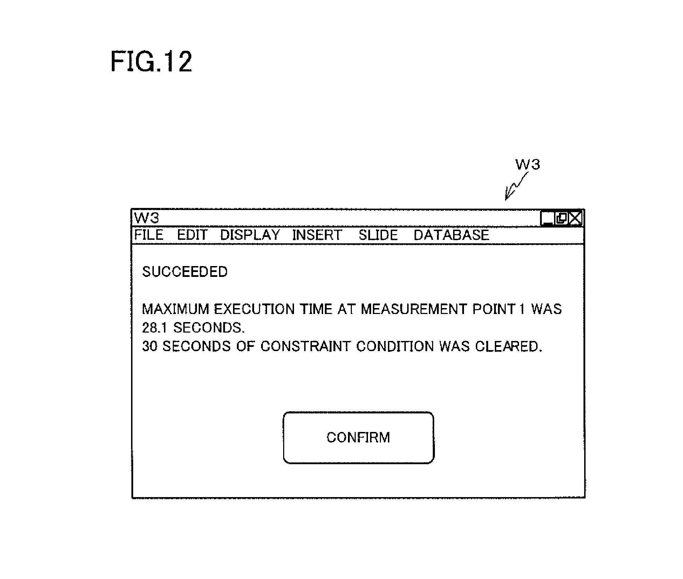

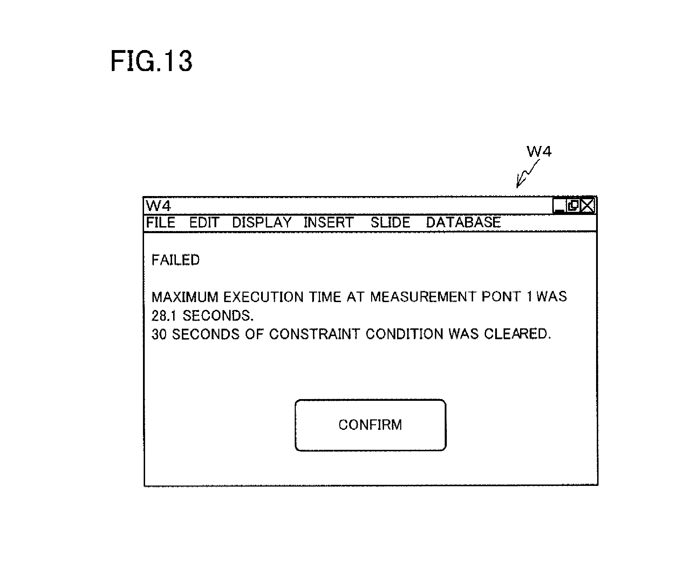

FIG. 12 and FIG. 13 are diagrams illustrating a comparison result displayed on the display 106. For example, when the measurement result is shorter than the time limit, the CPU 10a displays a window W3 illustrated in FIG. 12 on the display 10b, thereby displaying that the process by the remote control device 21 completes within the time limit. Conversely, when the measurement result is longer than the time limit, the CPU 10a displays a window W4 illustrated in FIG. 13 on the display 10b, thereby displaying that the process by the remote control device 21 does not complete within the time limit.

As explained above, according to this embodiment, matching is performed using the source code patterns P, and thus the source code 102 for generating the operation program 105 is converted into the converted data CD including the control blocks BC. Next, the converted data CD including the control blocks BC becomes visible by icons IC correspondingly defined for the respective control blocks BC. Hence, the operator of the software generation device 10 can visually grasp the detail of the source code 102.

According to this embodiment, when the icon IC displayed on the display 10b is operated, a window displaying the source code pattern P at a location relating to that icon appears in a pop-up manner. When a source code is added to this window or a source code displayed on the window is deleted, the source code 102 can be generated or edited. Hence, the source code 102 can be generated sensuously and easily, thereby enabling an easy generation of the operation program 105.

According to this embodiment, the source code 102 is displayed by the icons IC arranged and displayed on the display 106. When a desired icon IC is inserted between those icons IC or an unnecessary icon is deleted, the source code 102 can be generated or edited. Accordingly, the source code 102 can be generated sensuously and easily, thereby enabling an easy generation of the operation program 105.

According to this embodiment, when the remote control device 21 executes the operation program 105, a time needed for the execution is evaluated. Next, as is clear from FIG. 12 and FIG. 13, for example, a popped-up window on the input screen displays the evaluation result. Accordingly, the operator of the software generation device 10 can visually grasp the load, etc., of the remote control device 21. Hence, the generated operation program 105 can be easily examined.

According to this embodiment, the source code pattern P is subjected to matching with the source code 102 to generate the converted data CD. Accordingly, the converted data CD can be generated from the source code pattern generated through the other devices.

According to this embodiment, the converted data is generated through a matching of the source code pattern P configuring the dictionary information. Hence, when, for example, dictionary information suitable for the application of the operation program 105 is used, various operation programs 105 can be easily generated.

According to this embodiment, the software generation device 10 is connected to the remote control device 21 via a communication line, such as a LAN or a serial cable. This facilitates an examination or the like of the operation program 105.

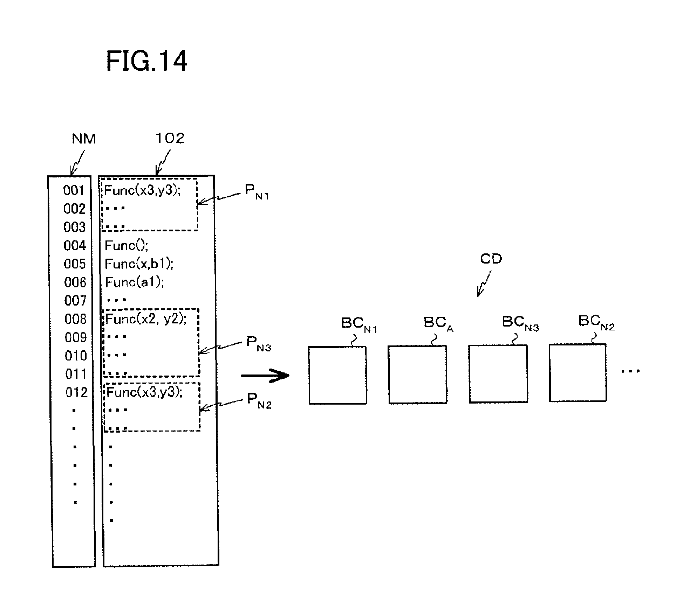

An embodiment of the present invention was explained above, but the present invention is not limited to the above-explained embodiment. For example, in the above-explained embodiment, as is clear from FIG. 4, the explanation was given of a case in which all source codes 102 are replaced with source code patterns P composing the dictionary information 101. However, as illustrated in FIG. 14, there may be a case in which no source code pattern P defined by the source code from, for example, the line [004] to the line [007] is present. In this case, the CPU 10a newly defines a control block BC_{A} having a source code from the line [004] to the line [007]. Next, the converted data CD is generated using a group of control blocks including this control block BC_{A}. Accordingly, the source code 102 can be converted into the converted data CD including the control blocks, and can be expressed as a layout of the icons IC likewise.

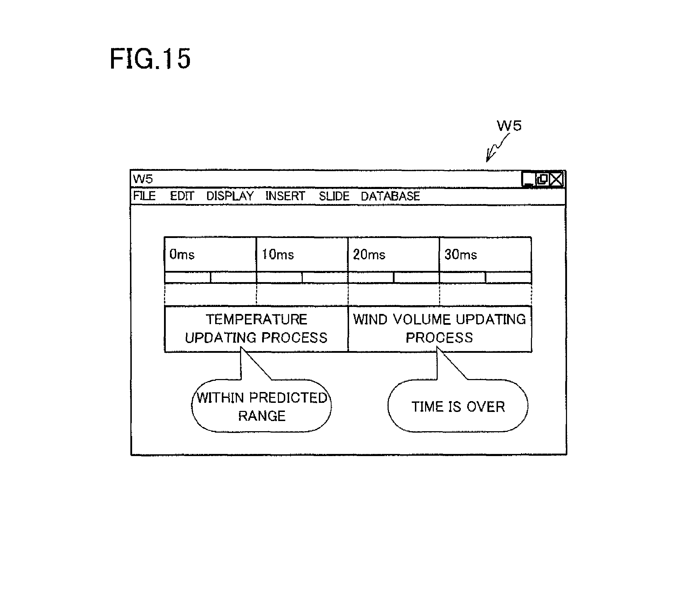

According to this embodiment, an evaluation result of a time necessary for the remote control device 21 to execute the operation program 105 is displayed on, for example, the windows W3 and W4 illustrated in FIG. 12 and FIG. 13. Instead of this configuration, for example, as illustrated in FIG. 15, a window W5 that displays a time line for each process may be displayed. Moreover, the window W5 may display a text indicating whether or not the predetermined process has completed within the time limit. Accordingly, it becomes possible to visually grasp the process time from the time line, and to accurately check the evaluation result of the process time from information via text.

According to this embodiment, the operation program 105 is uploaded to the remote control device 21 through a communication between the software generation device 10 and the remote control device 21. The present invention is not limited to this case, and the operation program 105 generated by the software generation device 10 may be installed in the remote control device 21 through a recording medium, such as a CD (Compact Disc) or a USB (Universal Serial Bus) memory.

According to this embodiment, the line number NM is added when the source code 102 is developed in the main memory 10d, but in addition to this operation, for example, a file name or the like may be added.

According to this embodiment, the explanation was given of the case in which the operation program 105 to be executed by the air-conditioning system 20 is generated using the software generation device 10. The present invention is not limited to this case, and the operation program 105 used for various installed facilities like a lighting device can be generated using the software generation device 10.

According to this embodiment, the control block is any one of the structure block, the call-out block, the control block representing the measurement-start probe, the control block representing the measurement-end probe, or the access block. The present invention is not limited to this case, and matching may be performed using the control block relating to a source code pattern according to other processes as needed.

The function of the software generation device 10 according to this embodiment can be also realized by exclusive hardware resources.

The present invention permits various embodiments and modifications without departing from the broad scope and spirit of the present invention. The above-explained embodiment is to explain the present invention, and is not to limit the scope and spirit of the present invention. That is, the scope and spirit of the present invention are indicated by the appended claims not by the embodiment. Various modifications carried out within the scope and spirit of the present invention and equivalent to the scope and spirit of the present invention can be deemed within the scope and spirit of the present invention.

This application is based on Japanese Patent Application No. 2010-225244 filed on October 4, 2010. The whole specification, claims, and drawings of Japanese Patent Application No. 2010-225244 are herein incorporated in this specification by reference.

### Industrial Applicability

The software generation device, software generation method, and program of the present invention are suitable for generation of a software.

### Description of Reference Numerals

- 10: Software generation device
- 10a: CPU
- 10b: Display
- 10c: Input
- 10d: Main memory
- 10e: Auxiliary memory
- 10f: Communication unit
- 10g: System bus
- 20: Air-conditioning system
- 21: Remote control device
- 21a: CPU
- 21b: Display
- 21c: Input
- 21d: Main memory
- 21e: Auxiliary memory
- 21f: Communication unit
- 21g: System bus
- 22: Air-conditioner device
- 22a: Memory
- 22b: Output control unit
- 22c: Communication unit
- 101: Dictionary information
- 102: Source code
- 103: Control block information
- 104: Control block related information
- 105: Operation program
- 106: Operation constraint condition information
- BC: Control block
- CD: Converted data
- CON: Control detail information
- DC: Converted data
- IC: Icon
- ID: Identification number
- LD: Location information
- NW: Line number
- P: Source code pattern

## Claims

1. A software generation device comprising:
matching means for matching a plurality of blocks with a source code of a software, the block comprising a letter string composing a part of the source code and defined in advance;
converting means for replacing a part of the source code where the block matches with the matched block to convert the source code into data including the block; and
generating means for generating the software based on the data including the block.

2. The software generation device according to claim 1, further comprising displaying means for displaying the data including the block as a layout of graphics corresponding to the respective blocks.

3. The software generation device according to claim 2, wherein the graphic is an icon.

4. The software generation device according to claim 3, further comprising an interface for changing the layout of the graphics,
wherein the generation means generates the software based on data defined by the layout of the blocks corresponding to the changed layout of the graphics.

5. The software generation device according to any one of claims 1 to 4,
wherein the displaying means shows a comparison result of a necessary time until a specific process defined by the software completes with a time limit set in advance when a predetermined device is caused to execute the software.

6. The software generation device according to claim 5, further comprising communication means for uploading the software to the device via a communication line.

7. The software generation device according to any one of claims 1 to 6, further comprising memory means for storing dictionary data indicating a correspondence between the block and the letter string composing a part of the source code,
wherein the matching means matches the block with the source code based on the dictionary data.

8. A software generation method comprising steps of:
matching a plurality of blocks with a source code of a software, the block comprising a letter string composing a part of the source code and defined in advance;
converting the source code into data including the block by replacing a part of the source code where the block matches with the matched block; and
generating the software based on the data including the block.

9. The software generation method according to claim 8, further comprising a step of displaying the data as a layout of graphics corresponding to the respective blocks.

10. A program causing a computer to execute procedures of:
matching a plurality of blocks with a source code of a software, the block comprising a letter string composing a part of the source code and defined in advance;
converting the source code into data including the block by replacing a part of the source code where the block matches with the matched block; and
generating the software based on the data including the block.

11. The program according to claim 10, further causing the computer to execute a procedure of displaying the data as a layout of graphics corresponding to the respective blocks.
